# FASCICULE DE BREVET EUROPEEN

(11) **EP 0 668 189 B1**
(45) Date de publication et mention de la délivrance du brevet: **04.06.1997**
(21) Numéro de dépôt: 95400327.3
(22) Date de dépôt: 16.02.1995
(51) Int. Cl.: B60R 7/06

(54) **Planche de bord de véhicule automobile**
Armaturenbrett eines Kraftfahrzeugs
Dashboard for automotive vehicle

(30) Priorité: 22.02.1994 FR 9401957
(43) Date de publication de la demande: 23.08.1995
(73) Titulaire: REGIE NATIONALE DES USINES RENAULT S.A., 92109 Boulogne Billancourt (FR); MATRA AUTOMOBILES SA, 78191 Trappes Cédex (FR)
(72) Inventeur: Milenovich, Milen, F-94230 Cachan (FR); Dedenis, Michel, F-91140 Villebon S/Yvette (FR)
(74) Mandataire: Ernst-Schonberg, Michel

(56) Documents cités:
- EP-A- 0 546 668
- US-A- 4 355 837

## Description

L'invention concerne une planche de bord de véhicule automobile dans laquelle un plateau arrière est limité par un bord transversal qui s'étend devant une rangée de sièges de passagers du véhicule.

On qualifiera dans la description et les revendications par "avant", les éléments et parties de la planche de bord dirigés vers la base du pare-brise du véhicule et "arrière", les éléments et parties de la planche de bord dirigés vers un siège du véhicule.

L'invention a plus particulièrement pour objet un module intégré à une telle planche de bord qui possède notamment une fonction de rangement.

L'invention a également pour objet un module à plusieurs volumes de rangement accessibles individuellement ou conjointement par un premier et par un deuxième couvercle.

La publication US-A-4355837 décrit un module de rangement intégré à une planche de bord dans lequel un support de chargement possède un bord avant et un bord arrière. Des moyens obturateurs sont constitués par un premier couvercle monté à pivotement sur le compartiment qui repose sur une butée localisée au-dessus du bord avant dudit support et par un deuxième couvercle monté à pivotement autour d'un axe adjacent au bord arrière du support.

Dans un tel module de rangement, les couvercles possèdent conjointement une position de fermeture et peuvent occuper individuellement ou conjointement une position d'ouverture pour faciliter notamment le chargement du compartiment.

La publication FR-A-2549787 décrit un module équipé d'un couvercle rabattable de haut en bas dans le but de faciliter la préhension et le rangement des objets par le dessus.

La publication EP-A-0 546 668 décrit un module à deux volumes de rangement, fermé par deux couvercles montés à pivotement sur le module.

L'invention a pour objet une planche de bord perfectionnée qui facilite notamment :
- la préhension et la mise en place des objets sur un premier support en soulevant un premier couvercle du module de rangement,
- la préhension et la mise en place des objets sur un deuxième support en ouvrant un deuxième couvercle localisé sur la façade arrière de la planche de bord,
- la condamnation d'un volume de chargement accessible par le deuxième couvercle,
- le rangement d'objets dans un volume de chargement accessible par le premier et par le deuxième couvercle,
- le rangement d'objets dans un volume de chargement accessible en soulevant le support,
- la réalisation d'un repose pieds au contact du bord arrière du support de chargement.

Selon l'invention le premier couvercle repose sur une butée localisée au dessus du support et la paroi avant du module de rangement porte des moyens d'appui et de retenue du support de chargement localisés à des hauteurs différentes, parmi lesquelles le support monté dans la position haute délimite avec les parois du compartiment un premier volume de rangement fermé par le premier couvercle et un deuxième volume de rangement fermé par le deuxième couvercle tandisque le support monté dans la position basse délimite avec les dites parois un premier volume de rangement fermé par l'ensemble des couvercles et un deuxième volume de rangement fermé par ledit support.

D'autres caractéristiques et avantages de l'invention apparaîtront à la lecture de la description d'un exemple de réalisation de la planche de bord en référence au dessin annexé dans lequel :
- la figure 1 est une représentation perspective de l'ensemble de la planche de bord,
- la figure 2 est une vue en coupe du compartiment de rangement selon la ligne II-II de la figure 1,
- les figures 3, 4, 5 sont des représentations schématiques des sections du module de rangement montrant les fonctions de rangement réalisées avec un support de chargement en position haute,
- les figures 6, 7, 8, 9, 10 sont des représentations schématiques des sections du module de rangement montrant les fonctions de rangement réalisées avec un support de chargement en position basse,
- la figure 11 est une représentation schématique du module de rangement vidé de son support de chargement,
- la figure 12 est une représentation perspective du support de chargement.

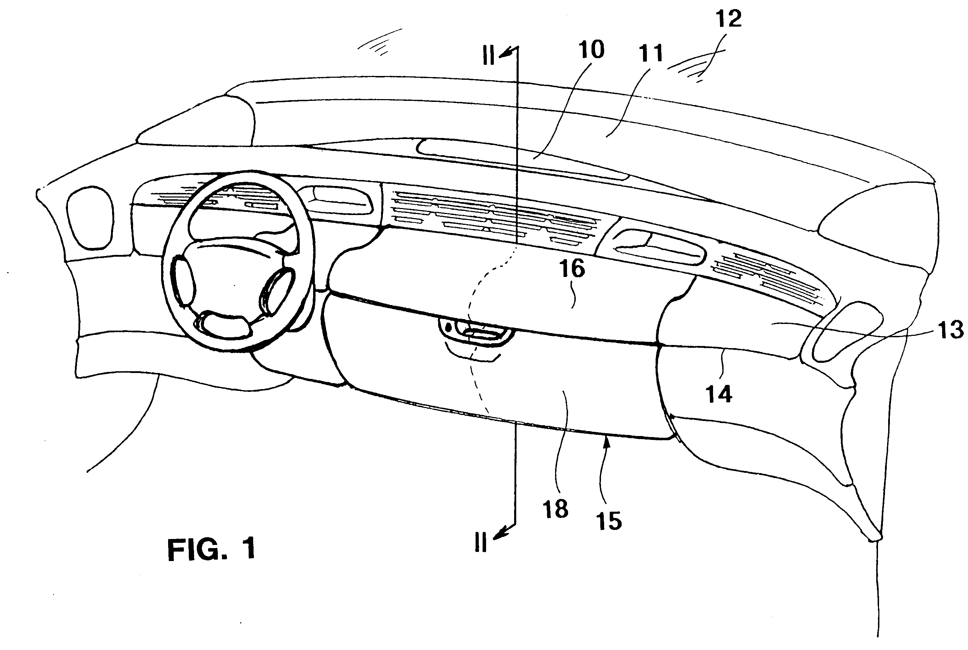

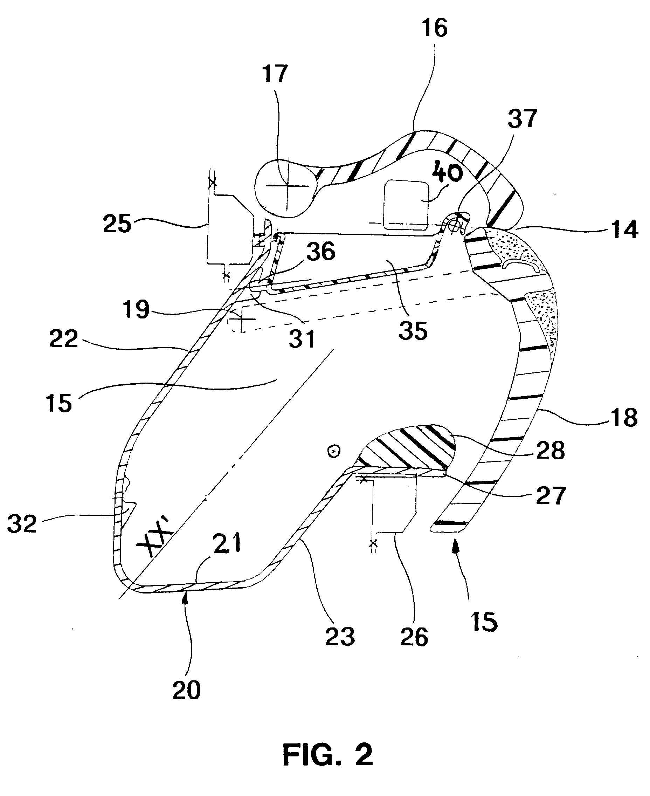

Ainsi que cela est montré à la figure 1 et 2 qui illustre un mode de réalisation de la planche de bord, un tableau d'instrumentation 10 est coiffé par un plateau avant 11 qui s'étend transversalement le long de la base du pare-brise 12. Un plateau arrière 13 est limité par un bord transversal 14 qui s'étend devant une rangée de sièges non représentés de passagers du véhicule.

Un module de rangement 15 est fermé à la fois par un premier couvercle 16 à commande manuelle monté à pivotement autour d'axes 17 portés par des parois latérales, et par un deuxième couvercle 18 monté à pivotement autour d'axes 19 portés par les parois latérales du module. A cet effet, le couvercle 18 obture une découpe du bord 14 et est solidaire de deux bras d'articulation montés sur les axes 19.

Le module 15 est constitué par un boîtier 20 qui possède une section transversale en U à branches inégales mieux représentée à la figure 2 dont l'axe XX' est incliné vers l'arrière. L'ouverture du module est ainsi située dans le champ de vision du passager du véhicule dans une découpe du bord transversal 14 de la planche de bord devant un siège de passager.

Le boîtier 20 possède une paroi de fond 21 et deux parois transversales opposées avant 22 et arrière 23 inégales représentées sur la section de la figure 2.

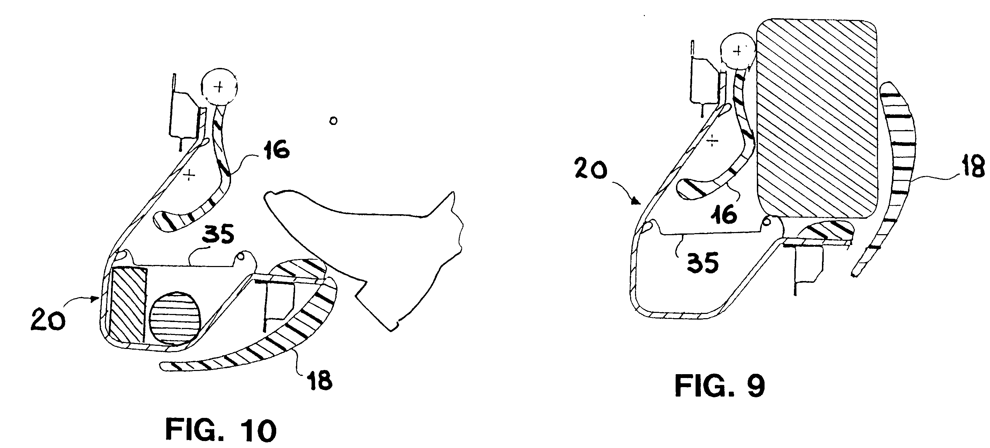

La paroi avant 22 est immobilisée et en appui sur une traverse supérieure 25 tandis que la paroi arrière 23 est en appui sur une traverse inférieure 26. La paroi arrière 23 possède à cet effet un bord d'appui 27 surmonté d'un bourrelet 28 remplissant la fonction de seuil et de repose-pieds ainsi que cela est montré par exemple à la figure 10.

La paroi avant 22 porte deux nervures d'appui 31, 32 et d'accrochage d'un support de chargement réalisé sous la forme d'un bac 35 qui sont localisées à des hauteurs différentes.

Le bac 35 possède à cet effet une paroi à bords d'accrochages avant 36 et arrière 37 qui permettent conjointement l'arc-boutement du bac au contact de la paroi avant 22 du compartiment 20.

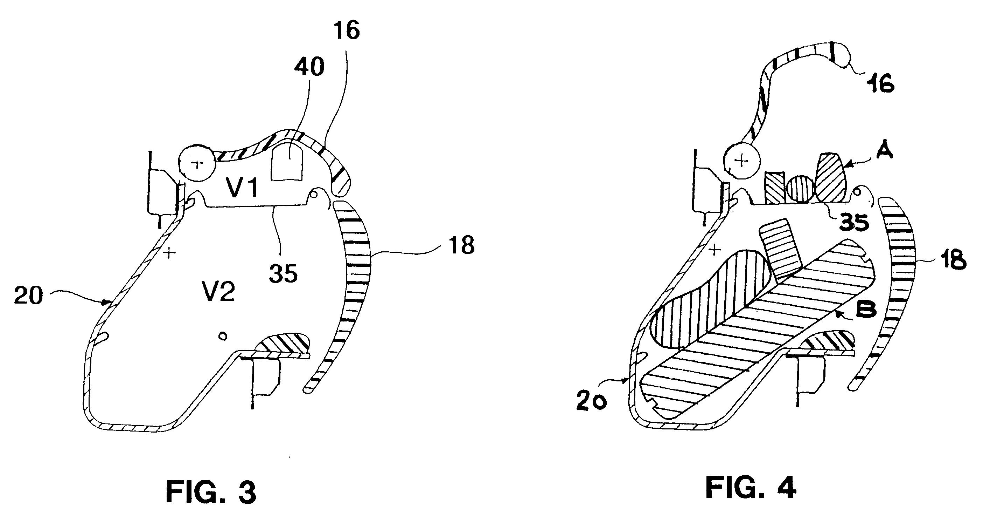

Ainsi que cela est montré aux figures 3 à 5 le bac 35 est monté dans la position haute et délimite avec les parois du boîtier 20 et avec les couvercles 16, 18 un premier volume de rangement V1 fermé par le premier couvercle 16 qui repose ici sur une butée latérale effaçable 40 représentée à la figure 3 localisée au dessus du bac 35.

Un deuxième volume de rangement V2 est fermé par le deuxième couvercle 18 ainsi que cela est montré sur le dessin. L'agencement précité permet la localisation des objets A, B dans l'un et/ou l'autre volume de rangement V1, V2. A cet effet le deuxième couvercle 18 pourra avantageusement porter un verrou de blocage non représenté, destiné au maintien du couvercle 18 en position fermée comme représentée à la figure 3. L'ouverture du couvercle 18 peut être obtenue sous l'effet du poids de ce dernier à la suite du déblocage du verrou.

La disposition précitée et les positions de service correspondantes des couvercles 16, 18 permettent au choix notamment
- la pose et la préhension des objets posés dans le bac 35 en soulevant le couvercle 16 et/ou,
- la pose et la préhension des objets posés dans le volume V2 en abaissant le deuxième couvercle 18 et/ou,
- la fermeture et le verrouillage du deuxième couvercle 18.

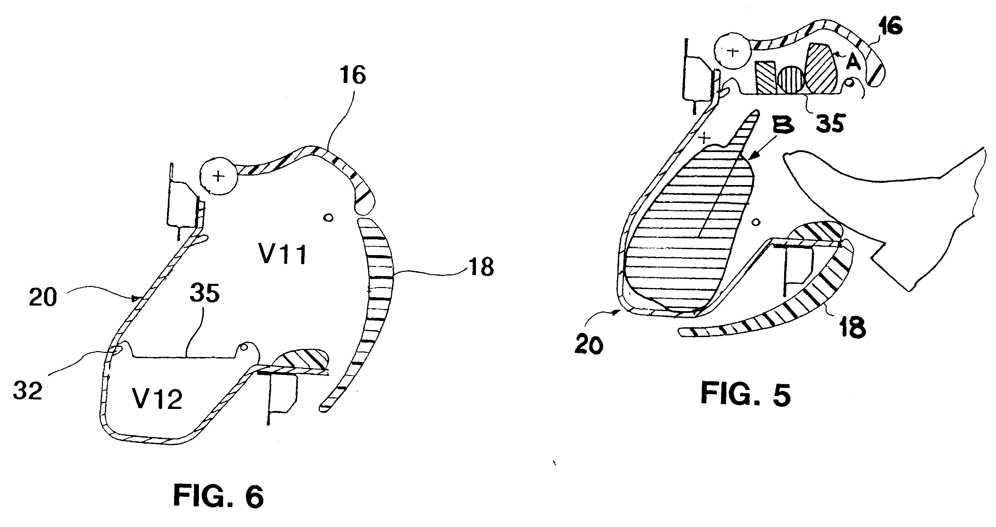

Ainsi que cela est montré aux figures 6 à 10, le bac 35 est monté dans la position basse sur la nervure d'appui 32 et délimite avec les parois du boîtier 20 et avec les couvercles 16, 18 un premier volume V11 de rangement fermé par les couvercles 16, 18 et un deuxième volume V12 de rangement fermé par le bac 35.

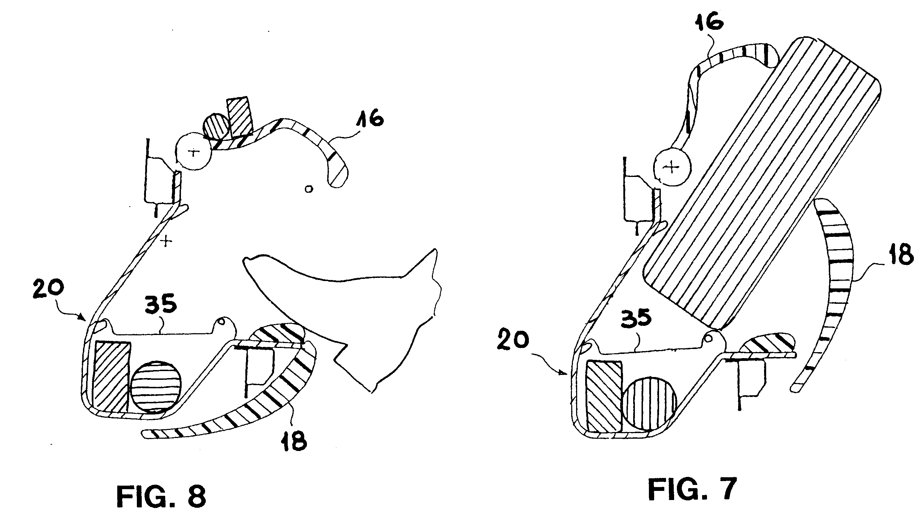

La disposition précitée et les positions de services correspondantes des couvercles 16, 18 permettent au choix notamment
- la pose et la préhension d'objets plus ou moins encombrants (figure 7) et/ou,
- le rangement vertical d'objets sur le bac et son bord d'appui (fig. 9).
- l'abaissement des deux couvercles permettant la pose d'objets au fond du boîtier 20, et pour réaliser la fonction repose-pieds (figure 10),

Sans sortir du cadre de l'invention il sera bien entendu possible d'imaginer d'autres agencements et utilisations des rangements précités.

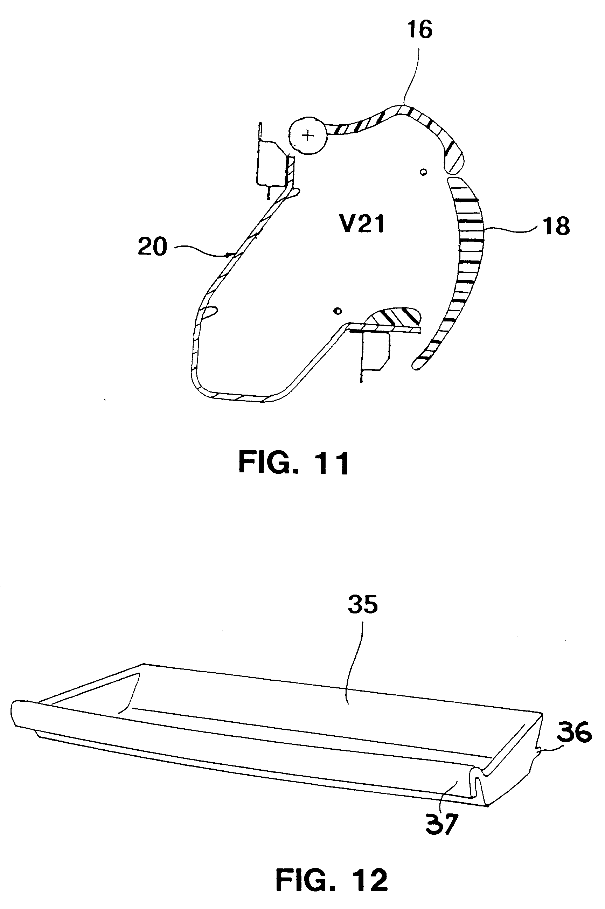

On voit par exemple à la figure 11 que les parois du boîtier 20 et les couvercles 16, 18 délimitent un volume maximal V21, après avoir enlevé le bac 35.

## Revendications

1. Planche de bord de véhicule automobile dans laquelle un plateau arrière (13) est limité par un bord transversal (14) qui s'étend devant une rangée de sièges de passagers du véhicule et sur laquelle un module (15) à deux volumes (V1, V2) de rangement est fermé à la fois par un premier couvercle (16) monté à pivotement sur le module et par un deuxième couvercle (18) obturateur d'une découpe du bord transversal (14) de la planche de bord localisée devant le siège dudit passager, caractérisée par le fait que le premier couvercle (16) repose sur une butée (40) localisée au-dessus d'un support de chargement (35) et que la paroi avant (22) du module de rangement porte des moyens d'appui (31, 32) et de retenue du support de chargement (35) localisés à des hauteurs différentes dans lesquelles le support (35) monté dans la position haute délimite avec les parois du module (15) un premier volume (V1) de rangement fermé par le premier couvercle (16) et un deuxième volume (V2) de rangement fermé par le deuxième couvercle (18), tandisque le support (35) monté dans la position basse, délimite avec les dites parois, un premier volume (V11) de rangement fermé par l'ensemble des couvercles (16, 18) et un deuxième volume de rangement (V12) fermé par ledit support (35).

2. Planche de bord selon la revendication 1, caractérisée par le fait que le module de rangement est constitué par un boîtier (20) qui possède une section transversale en U d'axe incliné vers l'arrière dont les branches inégales sont respectivement en appui sur une traverse supérieure (25), et sur une traverse inférieure (26) et que cette dernière reçoit un bord d'appui-dudit boîtier (20), porteur d'un repose-pieds (28).

3. Planche de bord selon la revendication 1, caractérisée par le fait que le support de chargement est constitué par un bac (35) dont la paroi possède des moyens d'accrochage (36, 37) et d'arc-boutement au contact de la paroi avant (22) du compartiment (20).

4. Planche de bord selon l'une quelconque des revendications 1 ou 2, caractérisée par le fait que le premier couvercle (16) et le deuxième couvercle (18) délimitent conjointement notamment un volume de rangement vertical.

## Claims

1. Dashboard for an automotive vehicle in which a rear shelf (13) is delimited by a transverse edge (14) which extends in front of a row of passenger seats in the vehicle and on which a module (15) with two storage spaces (V1, V2) is closed at the same time by a first cover (16) mounted in a pivoting manner on the module and by a second cover (18), covering a cut-out in the transverse edge (14) of the dashboard, located in front of the seat of said passenger, characterised by the fact that the first cover (16) rests on a stop (40) located above a load support (35) and that the front wall (22) of the storage module carries means (31, 32) for supporting and for retaining the load support (35) located at different heights, in which the support (35), mounted in the top position, delimits together with the walls of the module (15) a first storage space (V1) closed by the first cover (16) and a second storage space (V2) closed by the second cover (18), while the support (35), mounted in the bottom position, delimits together with said walls a first storage space (V11) closed by the assembly of covers 16, 18) and a second storage space (V12) closed by said support (35).

2. Dashboard according to claim 1, characterised by the fact that the storage module is constituted by a container (20) which has a U-shaped transverse section with an axis inclined towards the back, the unequal arms of which bear respectively on an upper cross-piece (25) and a lower cross-piece (26) and that the latter receives a supporting edge of said container (20) which carries a foot-rest (8).

3. Dashboard according to claim 1, characterised by the fact that the load support is constituted by a tray (35), the wall of which has means (36, 37) for latching and for hanging in contact with the front wall (22) of the compartment (20).

4. Dashboard according to any one of claims 1 or 2, characterised by the fact that the first cover (16) and the second cover (18) together delimit, in particular, a space for vertical storage.

## Patentansprüche

1. Armaturenbrett für ein Kraftfahrzeug, bei welchem eine hintere Platte (13) durch einen Querrand (14) begrenzt ist, der sich vor einer Sitzreihe für Fahrzeuginsassen erstreckt, und auf dem ein Modul (15) mit zwei Ablagevolumina (V1, V2) gleichzeitig durch einen ersten Deckel (16), der schwenkbar am Modul angebracht ist, und durch einen zweiten Deckel (18) abgeschlossen ist, der einen Ausschnitt des Querrands (14) des Armaturenbretts abdeckt, das vor dem Insassensitz angeordnet ist, dadurch gekennzeichnet, daß der erste Deckel (16) auf einem Anschlag (40) ruht, der über einem Beladungsträger (35) angeordnet ist, und daß die Vorderwand (22) des Ablagemoduls Stütz- und Rückhaltemittel (31, 32) für den Beladungsträger (35) trägt, die auf unterschiedlichen Höhen angeordnet sind, wobei der Träger (35), der in der oberen Position angeordnet ist, mit den Wänden des Moduls (15) ein erstes Ablagevolumen (V1) begrenzt, das durch den ersten Deckel (16) abgeschlossen ist, und ein zweites Ablagevolumen (V2), das durch den zweiten Deckel (18) abgeschlossen ist, während der in der unteren Position angebrachte Träger (35) mit diesen Wänden ein erstes Ablagevolumen (V11) begrenzt, das durch die Gesamtheit der Deckel (16, 18) abgeschlossen ist, und ein zweites Ablagevolumen (V12), das durch den Träger (35) abgeschlossen ist.

2. Armaturenbrett nach Anspruch 1, dadurch gekennzeichnet, daß das Ablagemodul durch einen Kasten (20) gebildet ist, der einen U-förmigen Querschnitt mit einer nach hinten geneigten Achse aufweist, dessen ungleiche Schenkel sich jeweils auf einer oberen Traverse (25) und auf einer unteren Traverse (26) abstützen, und das letztgenannte einen Stützrand des Kastens (20) aufnimmt, der eine Fußstütze (28) bildet.

3. Armaturenbrett nach Anspruch 1, dadurch gekennzeichnet, daß der Beladungsträger durch eine Wanne (35) gebildet ist, deren Wandung Eingreifmittel (36, 37) und eine Einhängung in Kontakt mit der Vorderwand (22) des Faches (20) aufweist.

4. Armaturenbrett nach Anspruch 1 oder 2, dadurch gekennzeichnet, daß der erste Deckel (16) und der zweite Deckel (18) gemeinsam insbesondere ein vertikales Ablagevolumen begrenzen.
